# EUROPÄISCHE PATENTSCHRIFT

(11) **EP 1 919 714 B1**
(45) Veröffentlichungstag und Bekanntmachung des Hinweises auf die Patenterteilung: **21.10.2009**
(21) Anmeldenummer: 06776846.5
(22) Anmeldetag: 14.08.2006
(51) Int. Cl.: B42D 15/10

(54) **CHIPKARTE MIT EINER LICHTQUELLE**
CHIP CARD WITH A LIGHT SOURCE
CARTE À PUCE COMPORTANT UNE SOURCE LUMINEUSE

(30) Priorität: 19.08.2005 DE 102005039319
(43) Veröffentlichungstag der Anmeldung: 14.05.2008
(73) Patentinhaber: Giesecke & Devrient GmbH, 81677 München (DE)
(72) Erfinder: KLUGE, Stefan, 80997 München (DE)
(74) Vertreter: Dendorfer, Claus
(86) Internationale Anmeldenummer: PCT/EP2006/008037
(87) Internationale Veröffentlichungsnummer: WO 2007/020047

(56) Entgegenhaltungen:
- WO-A-99/36728
- WO-A-03/057502
- DE-A1- 10 153 260
- DE-A1- 10 317 467
- DE-A1- 10 344 271
- US-B2- 6 533 436

## Beschreibung

Die Erfindung betrifft einen kartenförmigen Datenträger mit einem integrierten Schaltkreis.

Chipkarten werden in vielen Bereichen eingesetzt, beispielsweise als Ausweisdokumente, zum Nachweis einer Zugangsberechtigung zu einem Mobilfunknetz oder zur Durchführung von Transaktionen des bargeldlosen Zahlungsverkehrs. Eine Chipkarte weist einen Kartenkörper und einen in den Kartenkörper eingebetteten integrierten Schaltkreis auf. Die eigentliche Funktionalität der Chipkarte wird vom integrierten Schaltkreis bereitgestellt. Hierzu sind im integrierten Schaltkreis beispielsweise Daten gespeichert und Anwendungen implementiert. Der Kartenkörper dient der Handhabung der Chipkarte und kann als Träger von visuellen Informationen und von Sicherheitsmerkmalen dienen. Dabei wird in der Regel versucht, der Chipkarte über eine geeignete Gestaltung des Kartenkörpers ein attraktives Aussehen zu verleihen.

Aus der DE 101 53 260 A1 ist eine Datenträgerkarte mit einem plattenförmigen Kartenkörper aus einem durchsichtigen Kunststoffmaterial bekannt, dem fluoreszierende Farbstoffe beigegeben sind. Bei einer Bestrahlung mit Licht auf den Flachseiten der Datenträgerkarte leuchtet diese beispielsweise an ihren Kantenflächen in der Farbe des beigemischten fluoreszierenden Farbstoffs. Dieser Leuchteffekt kann bei Sicherheitsüberprüfungen einer derartigen Karte genutzt werden.

Aus der DE 100 48 812 A1 ist ein Verfahren zur Personalisierung von lumineszierenden Echtheitsmerkmalen auf Datenträgern bekannt. Bei diesem Verfahren wird ein lumineszierendes Echtheitsmerkmal in den Kartenverbund eingebracht oder auf den Kartenverbund aufgebracht. Anschließend wird das Echtheitsmerkmal mit einem energiereichen Strahl personalisiert. Dadurch wird die Struktur des Echtheitsmerkmals lokal so verändert, dass bei lumineszierendem Aufleuchten des Echtheitsmerkmals der durch die Personalisierung eingeschriebene Schriftzug als Negativbild erkennbar ist. Die Anregung der Lumineszenz oder Phosphoreszenz erfolgt mittels UV-Licht oder eines elektromagnetischen Felds. Unter Normalbedingungen ist das Echtheitsmerkmal nicht sichtbar.

Aus der US-PS 3,604,901 ist eine Informationskarte bekannt, die als eine Laminatstruktur aus drei Lagen ausgebildet ist. Eine untere Lage aus einem opaken Material weist Löcher auf, die eine codierte Information darstellen. Eine mittlere Lage aus einem transluzenten Material füllt die Löcher aus. Eine obere Lage aus einem transparenten Material schützt die mittlere Lage.

DE 103 44 271 A1 betrifft ein Blattdokument, in welchem eine LED als Srahlungsquelle für ein passiv lumineszierendes Echtheitsmerkmal verwendet wird. DE 103 17 467 A1 betrifft eine Postkarte mit einem Licht emittierenden Element und einem lichtdurchlässigen Bereich.

Aus der WO 93/ 23826 A1 ist eine Chipkarte bekannt, bei der ein lichtsammelnder Kunststoff zur Weiterleitung von Lichtsignalen zu Empfangsdioden verwendet wird. Die Lichtsignale werden durch optische Schaltelemente beeinflusst. Mit den Schaltelementen kann beispielsweise ein Geheimcode eingegeben werden. Die Einstrahlung des Lichts kann aus der Umgebung oder mittels einer integrierten Sendediode erfolgen.

Der Erfindung liegt die Aufgabe zugrunde, den Aufbau eines Kartenkörpers einer Chipkarte so zu gestalten, dass ein oder mehrere graphische Elemente des Kartenkörpers visuell hervorgehoben werden.

Diese Aufgabe wird durch eine Chipkarte mit der Merkmalskombination des Anspruchs 1 gelöst.

Die erfindungsgemäße Chipkarte ist ein kartenförmiger Datenträger und weist einen Kartenkörper auf, auf dem ein graphisches Element dargestellt ist. Der Kartenkörper weist ein Kunststoffmaterial zur Umwandlung von eingestrahltem Licht in Sekundärlicht und zur Weiterleitung des Sekundärlichts innerhalb des Kunststoffmaterials zum graphischen Element oder zu einem Teilbereich des graphischen Elements auf. Die Besonderheit der Chipkarte besteht darin, dass der Kartenkörper eine Lichtquelle zur Einstrahlung von Licht in einen durch das Kunststoffmaterial gebildeten Formkörper aufweist, wobei die Lichtquelle im Bereich einer Schmalseite des Formkörpens angeordnet ist und die Lichtquelle zur Aussenseite des Kartenkörpers hin durch wenigstens eine opake Schicht abgedeckt ist.

Dies hat den Vorteil, dass mit einem vertretbaren Aufwand eine deutliche visuelle Hervorhebung eines graphischen Elements auf einem Kartenkörper möglich ist. Dabei ist es besonders vorteilhaft, dass das graphische Element mit Hilfe der im Kartenkörper angeordneten Lichtquelle auch bei ungünstigen äußeren Lichtverhältnissen deutlich sichtbar ist. Die Chipkarte ist langlebig und weist ein hochwertiges und markantes äußeres Erscheinungsbild auf.

Vorzugsweise ist die Lichtquelle wenigstens partiell innerhalb des Formkörpers angeordnet. Dadurch ist gewährleistet, dass ein hoher Anteil des Lichts der Lichtquelle tatsächlich in den Formkörper gelangt und somit ein guter Wirkungsgrad erreicht wird. Die Lichtquelle ist im Bereich einer Schmalseite des Formkörpers angeordnet, damit das eingestrahlte Licht im Formkörper einen langen Weg zurücklegt und dabei möglichst vollständig in Sekundärlicht umgesetzt wird. Die Lichtquelle ist zur Außenseite des Kartenkörpers hin durch wenigstens eine opake Schicht abgedeckt, so dass sie von außen nicht sichtbar ist.

Der Kartenkörper kann einen elektrischen Energiespeicher zum Versorgen der Lichtquelle mit elektrischer Energie aufweisen, so dass die Lichtquelle auch ohne ein externes Gerät funktionsbereit ist. Weiterhin kann der Kartenkörper ein Schaltelement zum Ein- und Ausschalten der Lichtquelle aufweisen. Dies ermöglicht beispielsweise eine Eingriffsmöglichkeit des Benutzers und schont den ggf. vorhandenen internen Energiespeicher. Ebenso ist es auch möglich, dass der Kartenkörper eine Empfangseinrichtung für eine kontaktlose Energieübertragung aufweist. Die Lichtquelle kann dabei an die Empfangseinrichtung angeschlossen sein, so dass kein interner Energiespeicher benötigt wird. Die Lichtquelle ist vorzugsweise als eine Leuchtdiode ausgebildet. Leuchtdioden sind in sehr kleinen Einbaumaßen verfügbar und besitzen einen relativ geringen Energieverbrauch.

Der Formkörper zur Darstellung des graphischen Elements kann wenigstens teilweise in wenigstens einer Ausnehmung des Kartenkörpers angeordnet sein. Weiterhin kann der Formkörper zur Darstellung des graphischen Elements ein lateral ausgedehntes Gebiet aufweisen, innerhalb dessen der Formkörper andere optische Eigenschaften als außerhalb des Gebiets besitzt.

In einem bevorzugten Ausführungsbeispiel des kartenförmigen Datenträgers ist der Formkörper wenigstens bereichsweise klar (im Sinne von klar durchsichtig oder klarsichtig) ausgebildet. Dadurch wird erreicht, dass die Umrisse des Formkörpers in den klar ausgebildeten Bereichen eine erhöhte Helligkeit aufweisen.

Der Formkörper kann innerhalb der Ausnehmung klar oder milchig ausgebildet sein. Auf diese Weise ist es möglich, dass entweder die Umrisse der Ausnehmung durch eine erhöhte Helligkeit in Erscheinung treten oder die Ausnehmung über ihre gesamte Fläche ungefähr die gleiche Helligkeit aufweist.

Besonders vorteilhaft ist es, wenn der Formkörper eine größere laterale Erstreckung als die Ausnehmung aufweist. Dadurch kommt es zu einer Konzentration des Lichts im Bereich der Ausnehmung, so dass eine hohe Helligkeit erreicht wird.

Der Kartenkörper ist in der lateralen Umgebung der Ausnehmung vorzugsweise opak ausgebildet. Dies hat den Vorteil, dass ein hoher Kontrast erzielt werden kann und außerhalb der Ausnehmung keine unerwünschten Effekte durch Streulicht auftreten. Insbesondere kann das lateral an die Ausnehmung angrenzende Kartenmaterial opak sein. Ebenso ist es auch möglich, dass der Kartenkörper wenigstens in einer lateralen Umgebung der Ausnehmung opak bedruckt ist.

Die andersartigen optischen Eigenschaften innerhalb eines Gebiets des Formkörpers lassen sich auf unterschiedliche Weise realisieren. Beispielsweise kann der Formkörper innerhalb dieses Gebiets milchig ausgebildet sein. In diesem Fall ist die Helligkeit innerhalb des gesamten Gebiets etwas höher als in dessen Umgebung. Ebenso ist es auch möglich, dass der Formkörper innerhalb des Gebiets eine dreidimensionale Oberflächenstruktur aufweist. Dies führt ebenfalls zu einer erhöhten Helligkeit innerhalb des Gebiets. Die dreidimensionale Oberflächenstruktur kann durch eine Vielzahl von Erhöhungen und/oder Vertiefungen gebildet werden, die über die gesamte Fläche des Gebiets verteilt sind.

Das Sekundärlicht wird vorzugsweise parallel zu einer Hauptfläche des Formkörpers weitergeleitet. Insbesondere zum Schutz gegen Verschmutzung und Abnutzung kann der Kartenkörper auf wenigstens einer Hauptfläche eine transparente Deckschicht aufweisen. Der Kartenkörper ist vorzugsweise durch Lamination hergestellt. Mit der Laminationstechnik lässt sich das Kunststoffmaterial gut verarbeiten und ein qualitativ hochwertiger Kartenkörper herstellen. Der Formkörper ist bevorzugt als ein Stanzteil ausgebildet.

Der Kartenkörper weist einen integrierten Schaltkreis auf und konn auch einen Magnetstreifen aufweisen.

Die Erfindung wird nachstehend anhand der in der Zeichnung dargestellten Ausführungsbeispiele erläutert.

Es zeigen:
- Fig.1: ein erstes Beispiel einer Karte in einer schematischen Aufsicht,
- Fig. 2: das erste Beispiel einer Karte in einer schematischen Schnittdarstellung,
- Fig. 3: die Lichtsammelfolie in einer schematischen Schnittdarstellung,
- Fig. 4: ein zweites Beispiel einer Karte in einer schematischen Aufsicht,
- Fig. 5: das zweite Beispiel einer Karte in einer schematischen Schnittdarstellung,
- Fig. 6: ein drittes Beispiel einer Karte in einer schematischen Schnittdarstellung,
- Fig. 7: ein viertes Beispiel einer Karte in einer schematischen Aufsicht,
- Fig. 8: das vierte Beispiel einer Karte in einer schematischen Schnittdarstellung,
- Fig. 9: ein erstes Ausführungsbeispiel der Chipkarte in einer schematischen Schnittdarstellung,
- Fig. 10: ein fünftes Beispiel einer Karte in einer schematischen Schnittdarstellung,
- Fig.11: je einen Schaltplan für zwei unterschiedliche Beschaltungen der beim fünften Beispiel einer Karte vorgesehenen Leuchtdiode,
- Fig. 12: ein sechstes Beispiel einer Karte in einer schematischen Schnittdarstellung und
- Fig. 13: je einen Schaltplan für zwei unterschiedliche Beschaltungen der Leuchtdiode beim sechsten Beispiel einer Karte.

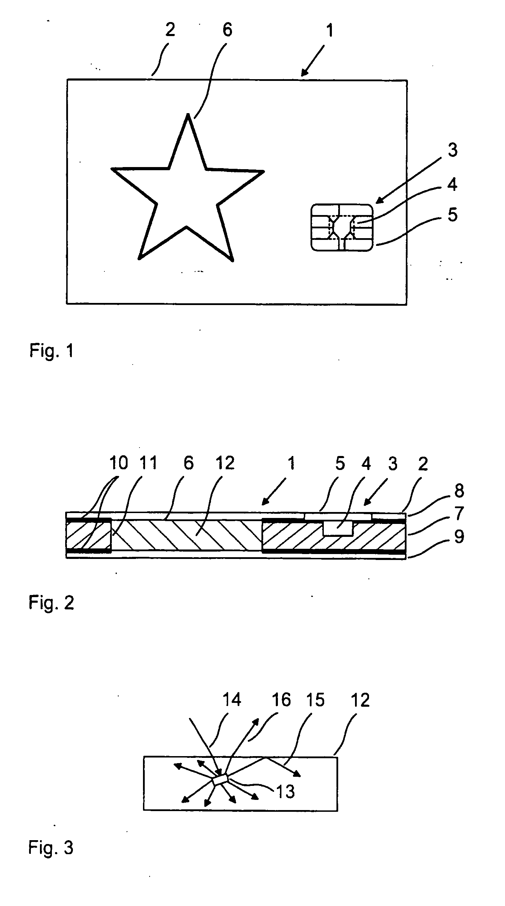

Fig.1 zeigt ein erstes Beispiel einer Karte 1 in einer schematischen Aufsicht. Eine zugehörige schematische Schnittdarstellung ist in Fig. 2 dargestellt. Die Karte 1 ist als eine Chipkarte ausgebildet, die einen Kartenkörper 2 aufweist, in den ein Chipmodul 3 eingebettet ist. Das Chipmodul 3 weist einen integrierten Schaltkreis 4 und ein Kontaktfeld 5 auf, das mit dem integrierten Schaltkreis 4 verbunden ist. Zur Durchführung einer Datenübertragung zwischen dem integrierten Schaltkreis 4 und einem nicht figürlich dargestellten externen Gerät wird das Kontaktfeld 5 des Chipmoduls 3 vom externen Gerät berührend kontaktiert. Alternativ zur Darstellung der Fig.1 und 2 kann das Chipmodul 3 auch für eine kontaktlose Datenübertragung ausgebildet sein und dann insbesondere im Inneren des Kartenkörpers 2 angeordnet sein. Ebenso kann die Karte 1 auch mit einem nicht figürlich dargestellten Magnetstreifen zur Speicherung von Daten ausgestattet sein. Dies alles gilt jeweils auch für die weiteren Beispiele der Karte 1. Bei diesen Beispielen wurde zum Teil von einer figürlichen Darstellung des Chipmoduls 3 abgesehen.

Der Kartenkörper 2 weist ein graphisches Element 6, beispielsweise in Form einer Beschriftung, einer Flagge, eines Logos, eines Emblems oder eines sonstigen Symbols auf. Das graphische Element 6 tritt visuell durch gegenüber der Umgebung aufgehellte Bereiche in Erscheinung. Dies wird durch einen Aufbau des Kartenkörpers 2 erreicht, bei dem mehrere Kunststofffolien mit unterschiedlichen optischen Eigenschaften durch Lamination miteinander verbunden sind.

Im einzelnen weist der Kartenkörper 2 beim ersten Beispiel eine Kernfolie 7 auf, deren erste Hauptfläche durch eine erste Deckfolie 8 und deren zweite Hauptfläche durch eine zweite Deckfolie 9 abgedeckt ist. Die Kernfolie 7 ist auf beiden Seiten vollflächig mit einem Aufdruck 10 versehen, der im Bereich des sichtbaren Lichts opak ist. Der Aufdruck 10 kann auch auf die Innenseiten, d. h. die an die Kernfolie 7 angrenzenden Hauptflächen, der Deckfolien 8 und 9 aufgebracht sein. Die Deckfolien 8 und 9 sind jeweils im Bereich des sichtbaren Lichts transparent ausgebildet.

In der Kernfolie 7 ist eine fensterartige Ausnehmung 11 ausgespart, deren Form durch das graphische Element 6 bestimmt ist. Innerhalb der Ausnehmung 11 ist die Kernfolie 7 durch eine Lichtsammelfolie 12 ersetzt, welche die äußere Form des graphischen Elements 6 aufweist und beispielsweise durch einen Stanzprozess hergestellt ist. Die Lichtsammelfolie 12 ist transparent und insbesondere klar ausgebildet, d. h. durch die Lichtsammelfolie 12 hindurch sind die Umrisse eines Gegenstands deutlich erkennbar. Im Bereich der Ausnehmung 11 ist kein Aufdruck 10 vorgesehen, d. h. die Lichtsammelfolie 12 wird durch den Aufdruck 10 nicht verdeckt. Allerdings erstrecken sich die Deckfolien 8 und 9 auch jeweils über die Ausnehmung 11, so dass die Lichtsammelfolie 12 beidseitig von den Deckfolien 8 bzw. 9 abgedeckt wird. Wie anhand von Fig. 3 noch näher erläutert wird, erscheint der Bereich der Lichtsammelfolie 12 etwas heller als die Umgebung und weist entlang ihrer Kontur, d. h. der Grenzfläche zur lateral benachbarten Kernfolie 7, eine deutlich erhöhte Helligkeit auf. Das graphische Element 6 zeichnet sich somit durch eine sehr hell erscheinende Kontur aus.

Bei einer Abwandlung des ersten Beispiels der Karte 1 entfällt die erste Deckfolie 8 und/ oder die zweite Deckfolie 9.

Fig. 3 zeigt die Lichtsammelfolie 12 in einer schematischen Schnittdarstellung. Die Lichtsammelfolie 12 besteht aus einem Kunststoff, beispielsweise aus Polycarbonat oder PVC, in den ein fluoreszierender Farbstoff eingelagert ist. In Fig. 3 ist beispielhaft ein Farbstoffpartikel 13 in starker Vergrößerung dargestellt. Bei Bestrahlung mit Licht wird der Farbstoffpartikel 13 zur Fluoreszenz angeregt und strahlt in alle Richtungen Fluoreszenzlicht aus, das eine größere Wellenlänge als das einfallende Licht aufweist. Die einfallenden Lichtstrahlen sind in Fig. 3 mit der Bezugsziffer 14, die Strahlen des Fluoreszenzlichts mit den Bezugsziffern 15 und 16 bezeichnet.

Die Fluoreszenzstrahlen 15 treffen unter relativ großen Winkeln auf die Hauptflächen der Lichtsammelfolie 12, die jeweils eine Grenzfläche zwischen der Lichtsammelfolie 12 und der Luft darstellen, welche die Lichtsammelfolie 12 umgibt Da die Lichtsammelfolie 12 eine größere Brechzahl als die Luft aufweist, kommt es bei Winkeln Oberhalb des Grenzwinkels der Totalreflexion zu einer Reflexion an der Grenzfläche. Dies bedeutet, dass die Fluoreszenzstrahlen 15 die Lichtsammelfolie 12 nicht verlassen, sondern abwechselnd an den gegenüberliegenden Hauptflächen reflektiert werden, bis sie eine der Stirnflächen der Lichtsammelfolie 12 erreichen, welche die beiden Hauptflächen miteinander verbinden. Da die Fluoreszenzstrahlen 15 unter einem relativ kleinen Winkel auf die Stirnfläche treffen, treten Sie durch die Stirnfläche hindurch aus der Lichtsammelfolie 12 aus. Beim Durchtritt durch die Stirnfläche werden die Fluoreszenzstrahlen 15 entsprechend dem Brechzahlverhältnis zwischen der Lichtsammelfolie 12 und der umgebenden Luft gebrochen.

Die Fluoreszenzstrahlen 16, die unter einem Winkel unterhalb des Grenzwinkels der Totalreflexion auf eine der Hauptflächen der Lichtsammelfolie 12 treffen, treten durch die Hauptfläche hindurch und werden dabei gebrochen. Dies bedeutet, dass die auf die Hauptflächen der Lichtsammelfolie 12 auftreffenden Lichtstrahlen 14 Fluoreszenzstrahlen 15 und 16 erzeugen, welche die Lichtsammelfolie 12 teils über deren Stirnflächen und teils über deren Hauptflächen verlassen. Da die Stirnflächen einen erheblich kleineren Flächeninhalt als die Hauptflächen aufweisen, konzentriert sich das Licht im Bereich der Stirnflächen und führt dort zu einer erhöhten Helligkeit.

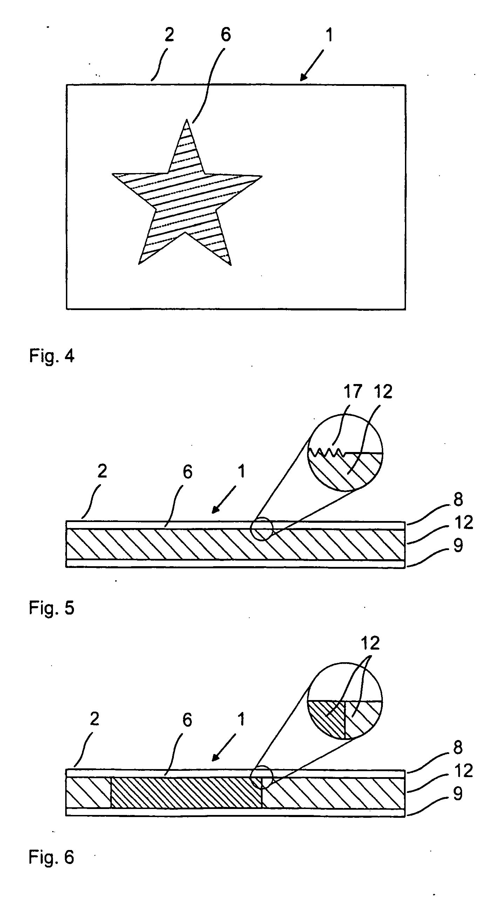

Fig. 4 zeigt ein zweites Beispiel der Karte 1 in einer schematischen Aufsicht Eine zugehörige schematische Schnittdarstellung ist in Fig. 5 dargestellt. Im Unterschied zum ersten Beispiel der Karte 1 weist das zweite Beispiel kein graphisches Element 6 mit besonders hellen Konturen auf. Stattdessen ist die gesamte Fläche des graphischen Elements 6 gleichmäßig ausgeleuchtet.

Dies wird dadurch erreicht, dass die Lichtsammelfolie 12 beim zweiten Beispiel nicht auf den Bereich des graphischen Elements 6 begrenzt ist, sondern lateral darüber hinausgeht und sich vorzugsweise über den gesamten Kartenkörper 2 erstreckt. Die Hauptflächen der Lichtsammelfolie 12 sind mit den transparenten Deckfolien 8 und 9 abgedeckt. Die Lichtsammelfolie 12 ist klar ausgebildet und weist im Bereich des graphischen Elements 6 eine dreidimensionale Oberflächenstruktur 17 auf. Die Oberflächenstruktur 17 ist in dem vergrößerten Ausschnitt der Fig. 5 dargestellt und weist eine Vielzahl von lateral aufeinander folgenden Erhöhungen und Vertiefungen auf, die beispielsweise wellenförmig ausgebildet sein können. Durch die Oberflächenstruktur 17 wird der Anteil der an der Grenzfläche der Lichtsammelfolie 12 reflektierten Fluoreszenzstrahlen 15 reduziert und der Anteil der die Grenzfläche passierenden Fluoreszenzstrahlen 16 erhöht. Dies hat zur Folge, dass der gesamte Bereich der Oberflächenstruktur 17 heller erscheint als die benachbarten Bereiche der Lichtsammelfolie 12 mit glatter Oberfläche. Die Kontur des graphischen Elements 6 weist gegenüber dessen Innenbereich keine oder nur eine geringfügig erhöhte Helligkeit auf.

Bei einer Abwandlung des zweiten Beispiels der Karte 1 entfällt die erste Deckfolie 8 und/oder die zweite Deckfolie 9.

Fig. 6 zeigt ein drittes Beispiel der Karte 1 in einer schematischen Schnittdarstellung. Die zugehörige Aufsicht entspricht der Fig. 4. Beim dritten Beispiel ist die Lichtsammelfolie 12 innerhalb des graphischen Elements 6 milchig ausgebildet und außerhalb des graphischen Elements 6 klar. Dies kann mit einer lateral durchgehenden Lichtsammelfolie 12 realisiert werden, die unterschiedlich behandelte Bereiche aufweist. Ebenso können auch mehrere unterschiedliche Lichtsammelfolien 12 lateral nebeneinander angeordnet werden. In beiden Fällen sind die Hauptflächen der Lichtsammelfolien 12 durch die Deckfolien 8 und 9 abgedeckt.

Beim dritten Beispiel der Karte 1 führt die im Bereich des graphischen Elements 6 milchige Ausbildung der Lichtsammelfolie 12 dazu, dass das graphische Element 6 vollflächig heller erscheint als dessen Umgebung. Im Gegensatz zum zweiten Beispiel der Karte 1 sind die Hauptflächen der Lichtsammelfolie 12 auch im Bereich des graphischen Elements 6 glatt ausgebildet.

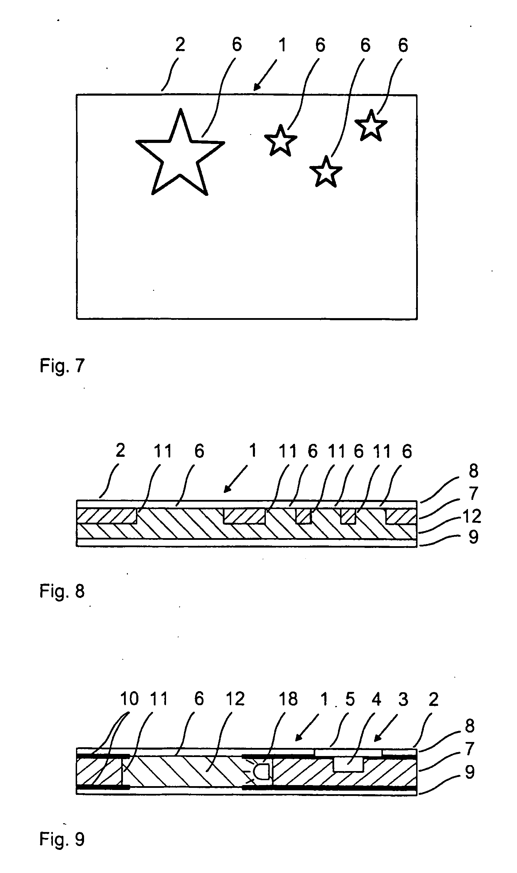

Fig. 7 zeigt ein viertes Beispiel der Karte 1 in einer schematischen Aufsicht. Eine zugehörige schematische Schnittdarstellung ist in Fig. 8 dargestellt. Der Kartenkörper 2 weist eine opake Kernfolie 7 mit mehreren Ausnehmungen 11 für je ein graphisches Element 6 auf. Weiterhin weist der Kartenkörper 2 eine Lichtsammelfolie 12 auf, die mit ihrer Hauptfläche an die Hauptfläche der Kernfolie 7 angrenzt und somit neben der Kernfolie 7 eine weitere Schicht des Kartenkörpers 2 darstellt. Dabei erstreckt sich die Lichtsammelfolie 12 in die Ausnehmungen 11 der Kernfolie 7 und füllt diese jeweils vollständig aus. Die Hauptflächen des Kartenkörpers 2 werden durch je eine transparente Deckfolie 8 bzw. 9 gebildet, d. h. sowohl die Kernfolie 7 als auch die Lichtsammelfolie 12 sind durch eine Deckfolie 8 bzw. 9 abgedeckt.

Die Lichtsammelfolie 12 kann durchgehend, d. h. sowohl innerhalb der durch die Lichtsammelfolie 12 ausgebildeten Schicht als auch innerhalb der Ausnehmungen 11 der Kernfolie 7, klar ausgebildet sein. In diesem Fall erscheinen die Konturen der graphischen Elemente 6 sehr hell, da über eine gesamte Hauptfläche des Kartenkörpers 2 Licht in die Lichtsammelfolie 12 eingestrählt wird und das Fluoreszenzlicht lediglich über die Stirnflächen der Lichtsammelfolie 12 und über die Ränder der Ausnehmungen 11 in der Kernfolie 7 entweichen kann. Die Helligkeit ist umso größer, je kleiner die Fläche der Ausnehmungen 11 in der Kernfolie 7 ist.

Wenn eine vollflächige Ausleuchtung der Ausnehmungen 11 in der Kernfolie 7 gewünscht wird, kann das vierte Beispiel so abgewandelt werden, dass die Lichtsammelfolie 12 im Bereich einer oder mehrerer Ausnehmungen 11 in der Kernfolie 7 die beim zweiten Beispiel beschriebene dreidimensionale Oberflächenstruktur 17 aufweist. Ebenso ist es auch möglich, eine oder mehrere der Ausnehmungen 11 in der Kernfolie 7 mit einer milchigen Lichtsammelfolie 12 zu füllen.

Fig. 9 zeigt ein erstes Ausführungsbeispiel einer erfindungsgemäß ausgebildeten Chipkarte 1 in einer schematischen Schnittdarstellung. Die zugehörige Aufsicht entspricht der Fig. 1. Beim ersten Ausführungsbeispiel ist eine Leuchtdiode 18 in Bereich einer Schmeseite der Lichtsammelfolie 12 angeordnet. Die Lichtsammelfolie 12 ist, ähnlich wie beim ersten Ausführungsbeispiel, in einer Ausnehmung 11 in der Kernfolie 7 angeordnet. Die Kernfolie 7 ist beidseits mit einem opaken Aufdruck 10 versehen, der sich lateral auch zum Teil über die Lichtsammelfolie 12 erstreckt. Dadurch wird insbesondere verhindert, dass die Leuchtdiode 18 von außerhalb des Kartenkörpers 2 sichtbar ist. Die Hauptflächen des Kartenkörpers 2 werden durch je eine Deckfolie 8 bzw. 9 gebildet, die sowohl die Aufdrucke 10 als auch die Lichtsammelfolie 12 abdecken.

Durch die Leuchtdiode 18 ist eine ausreichende Helligkeit des graphischen Elements 6 unabhängig von den jeweils herrschenden Lichtverhältnissen gewährleistet. Allerdings ist hierfür eine Stromversorgung der Leuchtdiode 18 erforderlich. Diese kann beispielsweise über ein Gerät erfolgen, welches die Chipkarte 1 zur Durchführung einer Datenübertragung berührend kontaktiert. Dabei sollte die Kontaktierung so erfolgen, dass das graphische Element 6 sichtbar bleibt. Andere Möglichkeiten der Stromversorgung für die Leuchtdiode 18 werden im folgenden beschrieben.

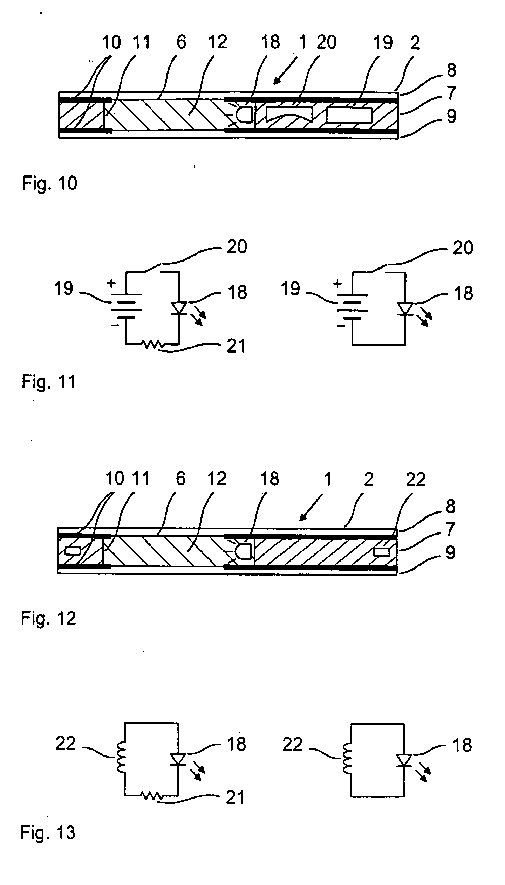

Fig. 10 zeigt ein fünftes Beispiel einer Karte 1 in einer schematischen Schnittdarstellung. Die zugehörige Aufsicht entspricht der Fig.1 ohne das Chipmodul 3. Beim fünften Beispiel sind innerhalb der Kernfolie 7 eine Batterie 19 als Stromversorgung für die Leuchtdiode 18 und ein Drucktaster 20 zum Ein- und Ausschalten der Leuchtdiode 18 angeordnet. Ansonsten entspricht der Aufbau des Kartenkörpers 2 dem ersten Ausführungsbeispiel. Die eingebaute Batterie 19 ermöglicht es, die Leuchtdiode 18 unabhängig von einem externen Gerät in Betrieb zu nehmen. Mögliche Beschaltungen der Leuchtdiode 18 sind in Fig. 11 dargestellt.

Fig. 11 zeigt je einen Schaltplan für zwei unterschiedliche Beschaltungen der beim fünften Beispiel der Karte 1 vorgesehenen Leuchtdiode 18. Bei dem links dargestellten Schaltplan ist die Leuchtdiode 18 über den Drucktaster 20 und einen Widerstand 21, die der Leuchtdiode 18 in Serie geschaltet sind, an die Batterie 19 angeschlossen. Bei dem rechts dargestellten Schaltplan entfällt der Widerstand 21.

Fig. 12 zeigt ein sechstes Beispiel einer Karte 1 in einer schematischen Schnittdarstellung. Die zugehörige Aufsicht entspricht der Fig. 1 ohne das Chipmodul 3. Der Aufbau des Kartenkörpers 2 entspricht in weiten Zügen dem fünften Beispiel. Allerdings weist der Kartenkörper 2 beim sechsten Beispiel weder eine Batterie 19 noch einen Drucktaster 20 auf. Stattdessen ist in der Kernfolie 7 eine Antennenspule 22 angeordnet, mit deren Hilfe die Leuchtdiode 18 mit Energie versorgt wird. Hierzu ist es erforderlich, dass sich die Karte 1 in der Nähe eines Sendegeräts befindet, das ein elektromagnetisches Feld erzeugt, welches auf die Antennenspule 22 der Karte 1 einwirkt. Die diesbezügliche Beschaltung der Leuchtdiode 18 ist in Fig. 13 dargestellt. Bei dem Sendegerät kann es sich um ein herkömmliches Gerät für eine kontaktlose Kommunikation mit der Karte 1 handeln.

Fig. 13 zeigt je einen Schaltplan für zwei unterschiedliche Beschaltungen der Leuchtdiode 18 beim sechten Beispiel der Karte 1. Beim links dargestellten Schaltplan ist die Leuchtdiode 18 über einen in Serie geschalteten Widerstand 21 an die Antennespule 22 angeschlossen. Bei dem rechts dargestellten Schaltplan ist die Leuchtdiode 18 direkt an die Antennenspule 22 angeschlossen.

Alternativ kann die Leuchtdiode auch mit einem Chip, der zum Zwecke einer kontaktlosen Kommunikation an eine Antenne angebunden ist, verbunden sein.

Die Ausführungsbeispiele, bei denen die Karte 1 eine Leuchtdiode 18 aufweist, können mit den zuvor ohne Leuchtdiode 18 beschriebenen Aufbauten für den Kartenkörper 2 kombiniert werden. So kann bei einer Karte 1 mit Leuchtdiode 18 beispielsweise eine Lichtsammelfolie 12 mit einer dreidimensionalen Oberflächenstruktur 17 oder eine milchige Lichtsammelfolie 12 eingesetzt werden.

Alle Ausführungsbeispiele, bei denen dies nicht ohnehin der Fall ist, können so abgewandelt werden, dass die graphischen Elemente 6 in der Nähe des Rands des Kartenkörpers 2 angeordnet sind. Dadurch wird erreicht, dass die graphischen Elemente 6 auch dann noch sichtbar sind, wenn die Karte 1 beispielsweise in einer Geldbörse aufbewahrt wird. Die dafür vorgesehenen Aufbewahrungsfächer decken den Kartenkörper 2 in der Regel nicht vollständig ab.

Der Kartenkörper 2 wird bei den vorstehend beschriebenen Ausführungsbeispielen der Karte 1 jeweils bevorzugt durch Lamination mehrerer Folien hergestellt. Dabei wird die Lichtsammelfolie 12 in den Fällen, in denen ihre Kontur durch das graphische Element 6 bestimmt wird, bevorzugt durch Stanzen in die gewünschte Form gebracht.

Ebenso ist es auch möglich, den Kartenkörper 2 auf andere Weise, beispielsweise im Spritzgussverfahren, herzustellen.

## Patentansprüche

1. Chipkarte mit einem Kartenkörper (2), auf dem ein graphisches Element (6) dargestellt ist, wobei der Kartenkörper (2) ein Kunststoffmaterial zur Umwandlung von eingestrahltem Licht in Sekundärlicht und zur Weiterleitung des Sekundärlichts innerhalb des Kunststoffmaterials zum graphischen Element (6) oder zu einem Teilbereich des graphischen Elements (6) aufweist,
wobei der Kartenkörper (2) eine Lichtquelle (18) zur Einstrahlung von Licht in einen durch das Kunststoffmaterial gebildeten Formkörper (12) aufweist;
und die Lichtquelle (18) im Bereich einer Schmalseite des Formkörpers (12) angeordnet ist, **dadurch gekennzeichnet,**
**dass** die Lichtquelle (12) zur Außenseite des Kartenkörpers (2) hin durch wenigstens eine opake Schicht (10) abgedeckt ist.

2. Chipkarte nach Anspruch 1, **dadurch gekennzeichnet, dass** die Lichtquelle (18) wenigstens partiell innerhalb des Formkörpers (12) angeordnet ist.

3. Chipkarte nach einem der vorhergehenden Ansprüche, **dadurch gekennzeichnet, dass** der Kartenkörper (2) einen elektrischen Energiespeicher (19) zum Versorgen der Lichtquelle (18) mit elektrischer Energie aufweist.

4. Chipkarte nach einem der vorhergehenden Ansprüche, **dadurch gekennzeichnet, dass** der Kartenkörper (2) ein Schaltelement (20) zum Ein- und Ausschalten der Lichtquelle (18) aufweist.

5. Chipkarte nach einem der vorhergehenden Ansprüche, **dadurch gekennzeichnet, dass** der Kartenkörper (2) eine Empfangseinrichtung (22) für eine kontaktlose Energieübertragung aufweist.

6. Chipkarte nach Anspruch 5, **dadurch gekennzeichnet, dass** die Lichtquelle (18) an die Empfangseinrichtung (22) angeschlossen ist.

7. Chipkarte nach einem der vorhergehenden Ansprüche, **dadurch gekennzeichnet, dass** die Lichtquelle (18) als eine Leuchtdiode ausgebildet ist.

8. Chipkarte nach einem der vorhergehenden Ansprüche, **dadurch gekennzeichnet, dass** der Formkörper (12) zur Darstellung des graphischen Elements wenigstens teilweise in wenigstens einer Ausnehmung (11) des Kartenkörpers (2) angeordnet ist.

9. Chipkarte nach einem der vorhergehenden Ansprüche, **dadurch gekennzeichnet, dass** der Formkörper (12) zur Darstellung des graphischen Elements ein lateral ausgedehntes Gebiet aufweist, innerhalb dessen der Formkörper (12) andere optische Eigenschaften als außerhalb des Gebiets besitzt.

10. Chipkarte nach Anspruch 8, **dadurch gekennzeichnet, dass** der Formkörper (12) eine größere laterale Erstreckung als die Ausnehmung (11) aufweist.

11. Chipkarte nach einem der Ansprüche 9-10, **dadurch gekennzeichnet, dass** der Formkörper (12) innerhalb des bezüglich der optischen Eigenschaften andersartigen Gebiets eine dreidimensionale Oberflächenstruktur (17) aufweist, die durch eine Vielzahl von Erhöhungen und/oder Vertiefungen gebildet wird.

12. Chipkarte nach einem der vorhergehenden Ansprüche, **dadurch gekennzeichnet, dass** das Sekundärlicht parallel zu einer Hauptfläche des Formkörpers (12) weiterleitbar ist.

13. Chipkarte nach einem der vorhergehenden Ansprüche, **dadurch gekennzeichnet, dass** der Kartenkörper (2) durch Lamination herstellbar ist.

14. Chipkarte nach einem der vorhergehenden Ansprüche, **dadurch gekennzeichnet, dass** der Formkörper (12) als ein Stanzteil ausgebildet ist.

## Claims

1. A chip card comprising a card body (2) on which a graphical element (6) is displayed, the card body (2) having a plastic material for converting irradiated light into secondary light and for transferring the secondary light within the plastic material to the graphical element (6) or to a portion of the graphical element (6),
wherein the card body (2) comprises a light source (18) for irradiating light into a shaped body (12) formed by the plastic material,
and wherein the light source (18) is disposed in an area of a narrow side of the shaped body (12),
**characterized in that** the light source (12) is covered by at least an opaque layer (10) towards the outer side of the card body (22).

2. The chip card according to claim 1, **characterized in that** the light source (18) is at least partially disposed within the shaped body (12).

3. The chip card according to any one of the preceding claims, **characterized in that** the card body (2) has an electrical energy storage device (19) for supplying the light source (18) with electrical power.

4. The chip card according to any one of the preceding claims, **characterized in that** the card body (2) has a switching element (20) for switching the light source (18) on and off.

5. The chip card according to any one of the preceding claims, **characterized in that** the card body (2) has a receiving device (22) for a contactless energy transmission.

6. The chip card according to claim 5, **characterized in that** the light source (18) is connected to the receiving device (22).

7. The chip card according to any one of the preceding claims, **characterized in that** the light source (18) is formed as a light-emitting diode.

8. The chip card according to any one of the preceding claims, **characterized in that** the shaped body (12) for displaying the graphical element is at least partially disposed in at least one cavity (11) of the card body (2).

9. The chip card according to any one of the preceding claims, **characterized in that** the shaped body (12) for displaying the graphical element has a laterally extended area within which the shaped body (12) has other optical properties than outside of the area.

10. The chip card according to claim 8, **characterized in that** the shaped body (12) has a larger lateral extent than the cavity (11).

11. The chip card according to any one of claims 9 -10, **characterized in that** the shaped body (12) has a three-dimensional surface structure (17) within the area that is different with regard to the optical properties, the three-dimensional surface structure (17) being formed by a plurality of elevations and/ or depressions.

12. The chip card according to any one of the preceding claims, **characterized in that** the secondary light can be transferred parallel to a main surface of the shaped body (12).

13. The chip card according to any one of the preceding claims, **characterized in that** the card body (2) is adapted to be produced by lamination.

14. The chip card according to any one of the preceding claims, **characterized in that** the shaped body (12) is formed as a stamped part.

## Revendications

1. Carte à puce avec un corps de carte (2) sur lequel est représenté un élément graphique (6), le corps de carte (2) présentant un matériau synthétique destiner à transformer une lumière incidente en lumière secondaire et à transmettre la lumière secondaire à l'intérieur du matériau synthétique en direction de l'élément graphique (6) ou d'une partie de l'élément graphique (6), le corps de carte (2) présentant une source lumineuse (18) pour envoyer de la lumière dans un corps moulé (12) formé par le matériau synthétique, et la source lumineuse (18) étant placée au niveau d'un petit côté du corps moulé (12),
**caractérisée en ce que** la source lumineuse (12) est recouverte d'au moins une couche opaque (10) en direction de l'extérieur du corps de carte (2).

2. Carte à puce selon la revendication 1, **caractérisée en ce que** la source lumineuse (18) est placée au moins partiellement à l'intérieur du corps moulé (12).

3. Carte à puce selon l'une des revendications précédentes, **caractérisée en ce que** le corps de carte (2) présente un accumulateur d'énergie électrique (19) pour alimenter la source lumineuse (18) en énergie électrique.

4. Carte à puce selon l'une des revendications précédentes, **caractérisée en ce que** le corps de carte (2) présente un élément de commutation (20) pour mettre en route et arrêter la source lumineuse (18).

5. Carte à puce selon l'une des revendications précédentes, **caractérisée en ce que** le corps de carte (2) présente un dispositif récepteur (22) pour une transmission d'énergie sans contact.

6. Carte à puce selon la revendication 5, **caractérisée en ce que** la source lumineuse (18) est associée au dispositif récepteur (22).

7. Carte à puce selon l'une des revendications précédentes, **caractérisée en ce que** la source lumineuse (18) est conformée en diode électroluminescente.

8. Carte à puce selon l'une des revendications précédentes, **caractérisée en ce que** le corps moulé (12) destiné à représenter l'élément graphique est placé au moins partiellement dans au moins un évidement (11) du corps de carte (2).

9. Carte à puce selon l'une des revendications précédentes, **caractérisée en ce que** le corps destiné à représenter l'élément graphique présente une zone étendue latéralement, à l'intérieur de laquelle le corps moulé (12) possède d'autres propriétés optiques qu'en dehors de la zone.

10. Carte à puce selon la revendication 8, **caractérisée en ce que** le corps moulé (12) présente une extension latérale plus grande que l'évidement (11).

11. Carte à puce selon l'une des revendications 9-10, **caractérisée en ce que** le corps moulé (12) présente dans la zone à propriétés optiques différentes une structure de surface tridimensionnelle (17) qui est formée par une pluralité de protubérances et/ou de renfoncements.

12. Carte à puce selon l'une des revendications précédentes, **caractérisée en ce que** la lumière secondaire est transmise parallèlement à une surface principale du corps moulé (12).

13. Carte à puce selon l'une des revendications précédentes, **caractérisée en ce que** le corps de carte (2) peut être fabriqué par stratification.

14. Carte à puce selon l'une des revendications précédentes, **caractérisée en ce que** le corps moulé (12) est conformé en pièce estampée.
